# NEW EUROPEAN PATENT SPECIFICATION

(11) **EP 2 549 144 B2**
(45) Date of publication and mention of the opposition decision: **14.06.2023**
(45) Mention of the grant of the patent: 18.10.2017
(21) Application number: 11425195.2
(22) Date of filing: 19.07.2011
(51) Int. Cl.: F16G 13/16, H02G 3/04, H02G 11/00

(54) **Energy chain provided with retractable supporting wheels**
Energieführungskette mit zurückziehbaren Stützrädern
Chaîne de transport d'énergie fournie avec des roues de support rétractables

(43) Date of publication of application: 23.01.2013
(73) Proprietor: Findalto S.r.l., 20052 Monza (MB) (IT)
(72) Inventor: Mauri, Giovanni, 20052 Monza (MB) (IT)
(74) Representative: Riccardi, Sergio

(56) References cited:
- EP-A1- 1 201 963
- EP-A1- 1 584 841
- EP-B1- 0 793 784
- EP-B1- 1 076 784
- DE-A1- 10 320 841
- DE-A1- 19 851 340
- DE-A1-102010 035 352
- US-A- 4 462 565
- US-A1- 2005 040 275

## Description

The present invention relates to an energy chain, more in particular to an energy chain provided with retractable supporting wheels.

In several applications an energy chain is provided for serving a device, such as an actuator, a tool or the like, which has to cover a long travel thus requiring a noticeable length of the cables, hoses and wires for supplying and controlling the device. It is common to fit the resulting energy chain length, in the space available close to the device guide defining such a long travel, through a folding back arrangement whereby two portions of the energy chain slide over each other. In particular, a first portion facing the supply and/or control unit of the device lays still while a second portion connected to the device is dragged over the above first portion: due to the continuity of the energy chain an intermediate third portion folds on itself thus defining a curved path having radius and angular development depending on the shape and size of the chain links. Focusing on the contact occurring between the first and second portion of the energy chain it is clear that the resulting friction leads to increased load values on the device and a corresponding increased force to move it along the guide, as well as higher wear of the chain links. All these issues cause more detrimental effects if high acceleration is required for device operation and the energy chain is arranged on a vertical plane as the added cables weight unavoidably generates further friction resistance.

In view of the foregoing issues many chain manufacturers have adopted rollers, wheels and the like arranged on the chain links so as to partially protrude therefrom and support the chain portion sliding over. Consequently the sliding friction between still portion and dragged portion can be converted in rolling friction between the provided rollers or wheels of each chain portions and the above/bottom portion chain links, thus achieving the desired reduction of the resistance encountered by the device drive, and the wear related to the energy chain links.

However the adoption of such rollers or wheels leads to an irregular operation of the chain since, due to the above high acceleration and speed often required, contact of said rollers results in the above roller jumping over the bottom roller and causes an overall waving of the energy chain, which is undesirable.

Document DE 19851340 A1 discloses a roller mounted in a housing arranged inside the chain link, the housing being closed in the lower still portion of the chain; when the link is sliding over the still portion in its upper dragged portion, the roller together with its mounting device is rotated by 180°, opening a window in the housing, through which the roller protrudes downwards rolling over the continuous surface of the lower portion of the chain.

Document US 2005/0040275 A1 discloses a link provided with a roller pushed outwardly by a spring against the enlarged walls of the upper portion of the chain guide channel; said walls are tapered so as to enclose the lower portion of the chain, thus forcing the roller to return flush to the surface of the lower portion of the chain, and forming the sliding surface for the rollers of said upper portion of the chain.

Document EP 1201963 A1 discloses a chain guide channel having enlarged side shoulders where the link rollers of the upper portion are running being pushed outwardly, while link rollers of the lower portion are retracted by suitable guides so as to run in the narrower lower portion of the guide channel.

Clearly, all these prior art systems add complexity to the structure of the chain, require a number of components with strict tolerances, are prone to jamming events and solve only partially the problems of wear, noise and malfunctions.

The energy chain according to the present invention disclosed by claim 1 overcomes the prior art drawbacks by providing retractable supporting wheels arranged on chain link so as to protrude therefrom only when in the still portion. Therefore every time a supporting wheel of a chain link in the dragged portion reaches the position of a wheel in the bottom still portion it is forced to retract within its chain link and avoid contact and jumping thereof.

Main object of the present invention disclosed by claim 1 is therefore to provide an energy chain highly reducing resistance on the served device even when arranged in a folded configuration.

The advantages and features of the energy chain provided with retractable supporting wheels according to the present invention will be clear from a detailed description of preferred embodiments taken in conjunction with the annexed drawings in which:
fig. 1 is a perspective view of a portion of the energy chain according to a first preferred embodiment of the present invention,
fig. 2 is a perspective view of a portion of the energy chain according to a second preferred embodiment of the present invention,
fig. 3 is a perspective view of one side of the energy chain according to fig. 1 and 2 in its folded configuration,
fig. 4 is a side view of portions of the energy chain in fig. 3 sliding on each other,
fig. 5 is a perspective view of single chain link of the first and second embodiment of fig. 1 and 2 in which a retractable supporting wheel is shown in a protruded position,
fig. 6 is a perspective view of the chain link in fig. 3 in which the retractable supporting wheel is shown in a retracted position,
fig. 7 is an upside down perspective view of the chain link in fig. 2,
fig. 7a is an enlarged perspective view of a detail of the chain link of fig. 5,
fig. 8 is a side view of the chain link in fig. 5,
fig. 8a is the cross sectional view of section A-A indicated in fig. 8,
fig. 9 is a side view of the chain link in fig. 6,
fig. 9a is the cross sectional view of section A-A indicated in fig. 9,
fig. 10a is a side view of supporting chain links in fig. 1 or 2 sliding on each other, with protruding corresponding wheels,
fig. 10b is a side view of supporting chain links in fig. 1 or 2 sliding on each other, the upper wheel being retracted by contact with the lower wheel.
fig. 11 is a perspective view of an alternative embodiment, not according to the claimed invention, of single chain link of the first or second embodiment in fig. 1 or 2,
fig. 12 is a yet alternative embodiment of single chain link of the energy chain in fig. 1 or 2, and
fig. 13 is a further alternative embodiment of the energy chain having chain links with staggered wheels in respect of each other,
fig. 13a is a cross sectional view of chain link taken along line A-A in fig. 13, and
fig. 13b is a cross sectional view of chain link taken along line B-B in fig. 13.

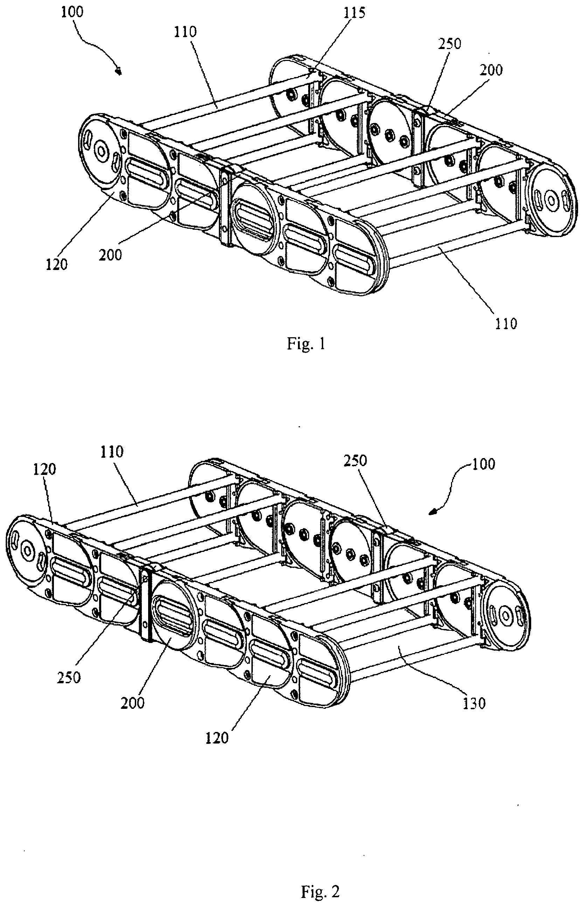

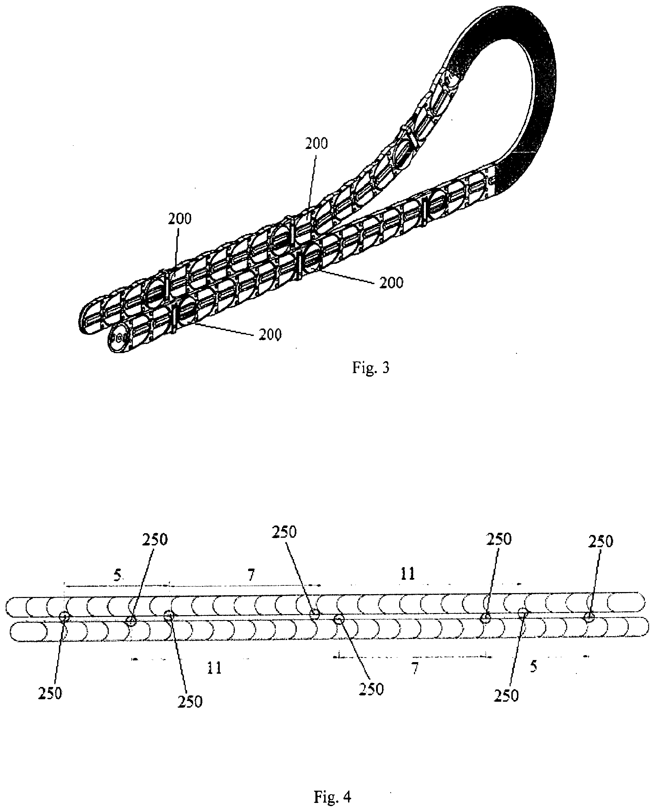

With reference now to figs. 1 and 2, right and left chain links 120 are joined in pairs at opposite ends 115 of upper and lower crossing members 110 so as to form an opening 130 in which cables, hoses or wires and the like can be passed. Each chain link 120 features a male side 122 and a female side 124 such that a male side of a chain link can be coupled to a female side of the facing chain link and rotated in respect thereof within a predetermined angular range. In this manner the above cables and the like can be collected by the plurality of subsequent openings 130 and carried by the chain 100. A supporting chain link 200 on the right and/or left side of some of the above chain link pairs is inserted in place of the chain link 120. The supporting chain link 200 has like male side 122 and female side 124 in order to be fitted in the chain 100 and is also equipped with a rotatable member 250, in the form of a wheel, placed approximatively midway between the male side and the female side thereof. In fig. 3 the energy chain 100 is shown in its folded configuration in which an upper chain portion slides on the lower still chain portion while being supported by wheels 250 of lower chain portion supporting links 200.

Such supporting links 200 may be inserted, in place of the conventional chain links 120, according to substantially two arrangements: irregular pitch arrangement or staggered pitch arrangement. As shown in fig. 1 the irregular pitch arrangement allows for insertion of left and right supporting chain links 200 at the same chain pitch, that is they are connected by the same pair of upper and lower crossing members 110, provided that the pitch distance between a pair of left and right chain links 200 and the subsequent one is irregularly increased. For example and as best depicted by fig. 4, subsequent supporting chain links 200 may be separated by 5, 7, 11, 13 pitches or any other irregular sequence which avoid a simultaneous contact of all the wheels 250 of the upper chain portion with all the wheels 250 of the lower chain portion. As shown in fig. 2, the alternative preferred embodiment of the chain 100 requires staggered insertion of supporting links 200 of the right side of the chain in respect of the left side or, which is the same, upper and lower crossing members 110 never connecting opposite supporting links 200.

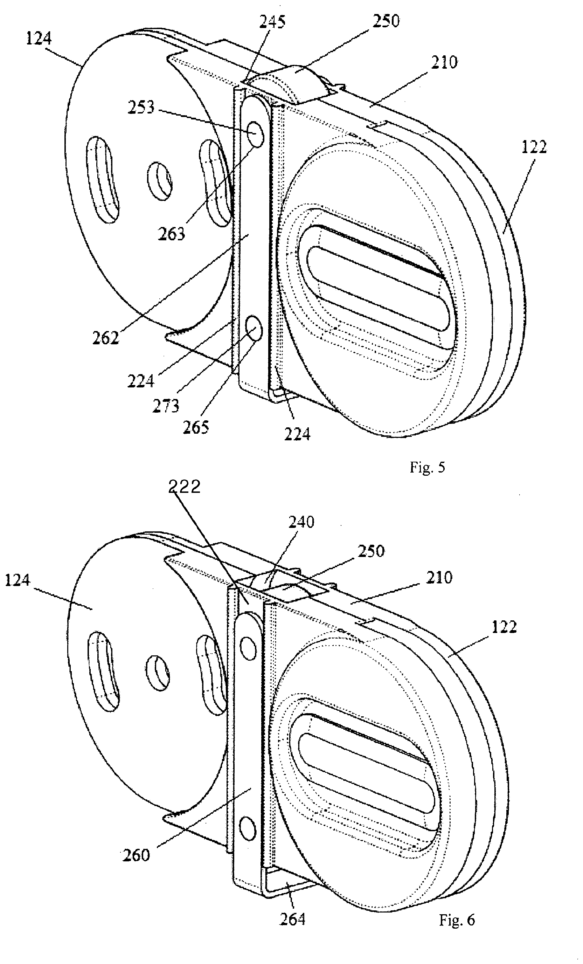

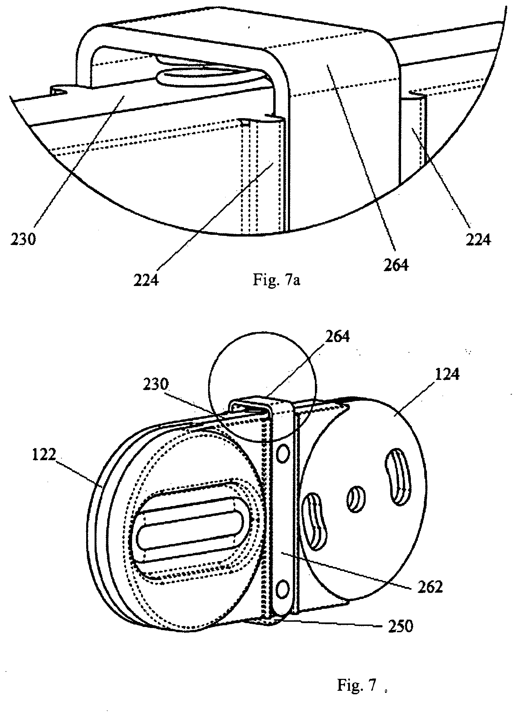

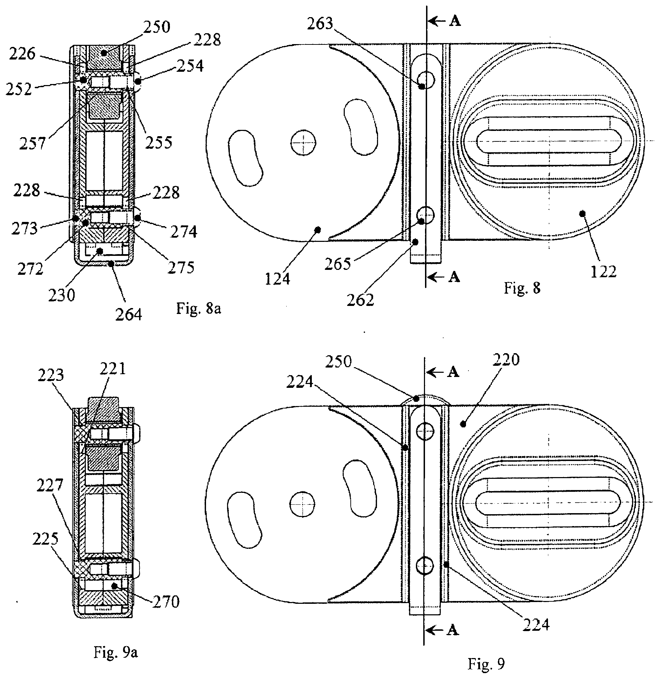

Turning now to figs. 5 to 9a, the supporting chain link 200 is shown in detail having female and male sides 122 and 124 which are identical to female and male sides 122 and 124 of the conventional chain link 120 thus allowing coupling and assembling of the energy chain 100. Additionally in respect of the conventional chain link 120 the supporting link 200 provides for a upper hollow 240 having an aperture 245 on the upper longitudinal surface 210 of the link 200 and extending inwardly within mid portion of the supporting link body. On each lateral side 220 of the link 200 a channel 222 is defined by a pair of vertical ribs 224, while first vertical slots 226 are adequately formed on opposite channels 222 next to the upper surface 210. Similarly second vertical slots 228, vertically aligned to the first slots 226, are also formed next to lower surface 230 and communicate with a lower hollow 270 of the supporting chain link 200. An elongated member 260 shaped as a U clip has a pair of legs 262 integrally formed with a shoulder 264 and is dimensioned for allowing slideable engagement of the legs 262 within opposite channels 222; upper through holes 263 and lower through holes 265 are provided on the legs 262 for communicating and being aligned with upper and lower slots 226 and 228, respectively, of the channels 222. In the upper hollow 240 the wheel 250 is housed and fixed to a shaft 252 having a first end 253 passing through the slot 226 of the facing channel 222 and fitted within a hole 263 of one clip leg 262; a pin 254 is then passed through the hole 263 of the other clip leg 262 and the slot 226 of the opposite channel 222 and inserted within the second shaft end 255 configured for receiving said pin 254. The shaft 252 may be used without any support member or, alternatively, a bearing or bush 257 can be suitably interposed between the wheel 250 and its shaft 252 allowing idle wheel rotation. Similar or like shaft 272 is housed into the lower hollow 270, a first end 273 thereof being fitted through a lower slot 228 within the facing hole 265 of the clip and locked at the other end 275 by a pin 274 inserted through opposite channel slot 228 and clip leg hole 266. According to such arrangement the wheel 250 within the body of the supporting chain link 200 is freely movable therein between a protruded position (as in fig. 5) and a retracted position (as in fig. 6), each position being determined by relative size of channel slots 226 and 228 between respective down and top ends 221, 223 and 225, 227, respectively, besides diameters of shafts 252 and 272 and length of the clip legs 262.

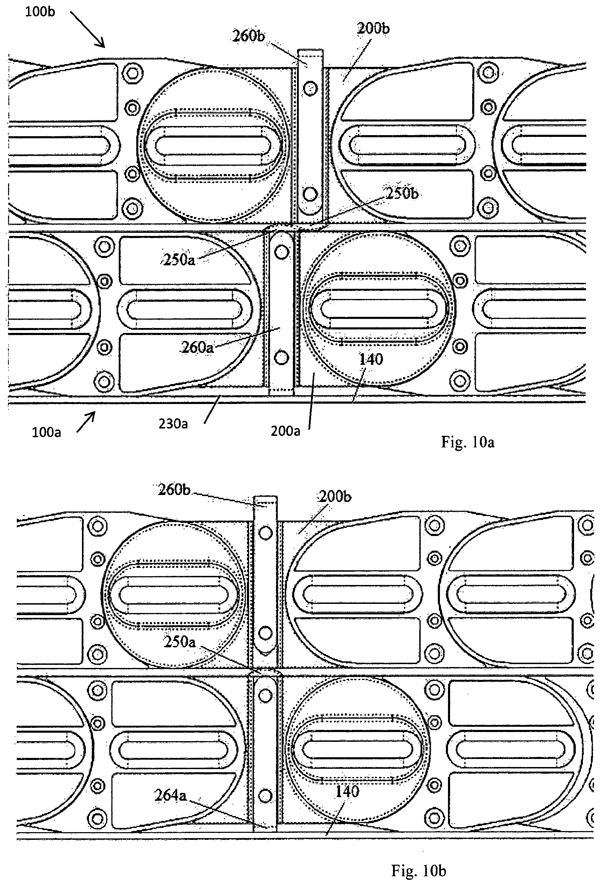

With reference now to figs. 10a and 10b, there are shown portions of the energy chain 100 sliding on each other, in particular the upper portion 100b, dragged by the device (not shown) served by the chain 100, slides on the lower portion 100a still on a reference surface 140, which can be any surface of a machine equipped with said device. Additionally it is to be envisioned that the above mentioned lower and upper portions 100a and 100b are intended displaced on each other on a vertical plane, which condition involves the weight of the cables and the chain besides all the other loads occurring in other displacements of the chain 100. A lower supporting chain link 200a in the lower portion 100a of the chain is still and has its lower surface 230a leant on the reference surface 140 and pressed thereon by weight of cables and chain upper portion 100b and loads resulting from chain acceleration. Therefore the U shaped clip 260a is forced with its shoulder 264a against the lower surface 230a thus causing the shaft 252a, and consequently the wheel 250a, to protrude from the aperture 245a. The supporting chain link 200 according to the preferred embodiment is designed to not allow abutment of the upper shafts 252 against the top ends 223 of the slots 226 and the lower shaft 270 against the top ends 227 of the slots 228: such design transfers load on the wheel 240 on the clip shoulder 264 and limits failure of the above parts. On the contrary, there is any load applied on the U shaped clip 260b of the upper supporting link 200b except the own weight of the clip 260b and the wheel 250b which is negligible in respect of all the other loads resulting from contact of the chain portions 100a and 100b. The wheel 250b of the upper supporting chain link 200b, while hitting the lower wheel 250a, moves to its retracted position within the hollow 240b thus avoiding jumping of the link over the wheel 250a.

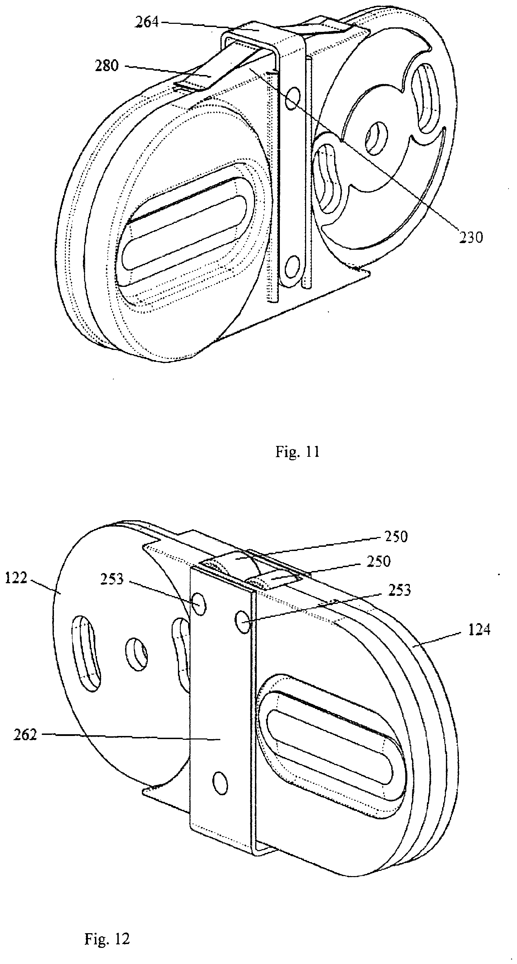

An alternative embodiment, not according to the claimed invention, of the supporting chain link 200 is shown in fig. 11 in which an elastic member 280, such as a iron strap is suitably shaped in order to keep the clip shoulder 264 raised over the facing lower surface 230 and, consequently, the wheel 250 in its retracted position within the chain link body. Adoption of said iron strap 280, or like member, for example a coil spring, avoids contact and hitting of the upper wheel 250b against the lower wheel 250a further reducing in respect of the preceding chain link embodiment waving of the chain, noise and vibrations. An elastic member 280 featuring low rigidity may also be selected which assures raising of the clip and the related wheel, having total small weight, when in upper chain portion and, at the same time, full abutment of the clip shoulder against the lower chain surface when in the lower chain portion.

A yet alternative embodiment of the supporting chain link 200 is shown in fig. 12 having a clip 260 fixed to a pair of supporting wheels 250 displaced side by side and simultaneously moved from retracted position to protruded position. The wheels 250 may be selected in different diameters and/or displaced with misaligned shaft axis. Such solutions particularly applies to applications in which heavier loads occur and a greater support surface of the wheel may be required.

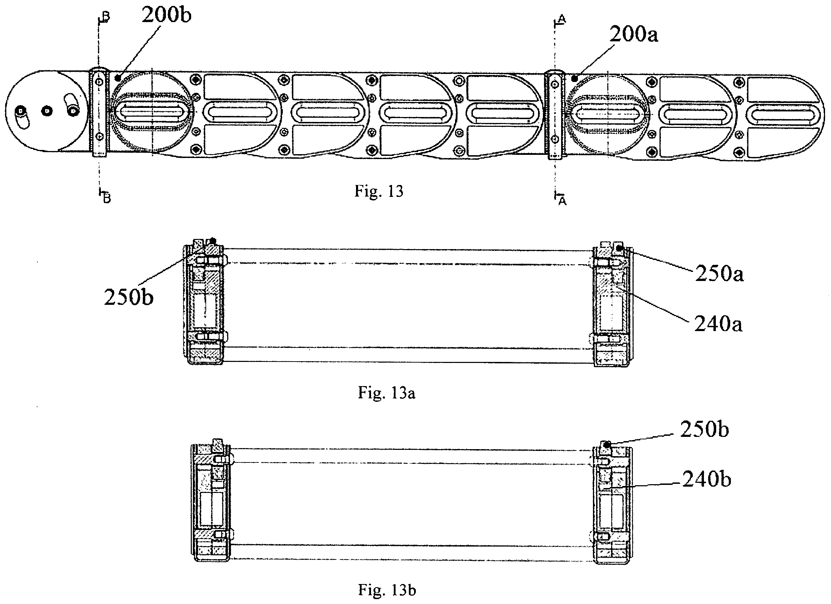

Finally a further alternative embodiment of the energy chain 100 is shown in fig. 13 in which subsequent supporting chain link 200a and 200b are provided with corresponding wheels 250a and 250b longitudinally staggered in respect of each other. Such configuration is best shown in the following figs. 13a and 13b being sections of the chain links 200a and 200b, respectively: the wheel 250a of chain link 200a is slideably housed in a hollow 240a formed on the outermost portion of the link body and therefore protruding from outermost portion of the upper surface 210, whilst the wheel 250b of the chain link 200b is slideably housed in a hollow 240b formed in the innermost portion of the link body and therefore protruding from innermost portion of the upper surface 210, thus being longitudinally staggered in respect of the wheel 250a for further reducing simultaneous contacts between wheels of energy chain upper and lower portions sliding over each other, as above discussed.

The above disclosed embodiments clearly show that the energy chain link 100 according to the present invention overcomes the drawbacks of the prior art by providing supporting chain links 200 that reduce all the issues related to sliding of a portion of the chain on the above portion when displaced in the folded configuration, namely resistance to driving of the served device, chain wear, while granting a regular motion thereof, limiting also noise and vibrations. The herein disclosure moreover teaches the optimal positioning arrangements of the supporting chain links within the chain, providing supporting chain links pairs at same chain pitch with distance between subsequent pairs irregularly increasing, rather than a single supporting chain link at any given pitch of the chain: as said these arrangements avoid simultaneous hitting of the supporting wheels so as to also reduce minimum waving motion of the chain.

Those skilled in the art would envision several modifications and changes to the energy chain link provided with retractable wheels according to the present invention, such as housing of the wheel within the link body, different number of wheels adopted for each supporting link or even various elastic members or displacement thereof in respect of the link body.

## Claims

1. An energy chain (100) for guiding cables and hoses including a lower still portion and an upper portion to be dragged in use by a served device slidably on said lower still portion, comprising:
- chain links (120) rotatably connected to one another and to
- supporting chain links (200) each provided with a wheel (250), a shaft (252) and an elongated member (260),
on each lateral side (220) of the supporting chain link (200) a facing channel (222) and an opposite channel (222) respectively being defined by a pair of vertical ribs (224) for each channel (222), while first vertical slots (226) are adequately formed on the channels (222) next to an upper longitudinal external surface (210) of the supporting chain link (200) body,
- said elongated member (260) being shaped as a U clip having a pair of leas (262) integrally formed with a shoulder (264) and dimensioned for allowing slideable engagement of the legs (262) within the opposite channels (222),
- said wheel (250) being:
- housed in an upper hollow (240, 240a, 240b) having an aperture (245) on the upper longitudinal external surface (210) of the supporting chain link (200) and extending inwardly within mid portion of the supporting chain link (200) body,
- in the upper hollow (240, 240a, 240b) fixed to the shaft (252), and
- able to protrude from the upper longitudinal external surface (210) of the supporting chain link,
- said shaft (252) having a first end (253) passing through the slot (226) of the facing channel (222) and fitted within a hole (263) of one clip leg (262), a pin (254) being then passed through the hole (263) of the other clip leg (262) and the slot (226) of the opposite channel (222) and inserted within a second shaft end (255) configured for receiving said pin (254),
- crossing members (110) each having opposite ends (115), each end (115) being connected with one of said chain links (120) or said supporting chain links (200),
- an opening (130) for insertion of said cable and hoses and defined by said crossing members (110) and said chain links (120) or supporting chain links (200) connected at opposite ends (115) thereof, wherein the shaft (252) of the supporting wheel (250) is slideable in at least one slot (226) of said supporting chain link (200) from a first position to a second position, the shaft (252) being further connected at the clip legs (262) with one end of the elongated member (260) having the other end thereof comprising the shoulder (264) and protruding from a surface (230) of the supporting chain link (200) opposite to said upper longitudinal external surface (210), and wherein in the lower still portion the supporting wheel (250a) always protrudes from said upper longitudinal external surface (210), the shaft (252) being in said first position, whereas in the upper dragged portion, the shaft (252) is in the second position, the supporting wheel (250b) is retracted behind said upper longitudinal external surface (210) within the upper hollow (240, 240a, 240b) when the wheel (250b) contacts a wheel (250a) protruding from the lower still portion during the chain translatory motion avoiding jumping of the link over the wheel (250a) protruding from the lower still portion.

2. The energy chain (100) according to the preceding claims, wherein additional slots (228) are formed on said opposite sides (220) of the supporting chain link (200), being aligned to said slots (226) and additional holes (265) of the leg (262), receiving an additional shaft (272) passed within said additional slots (228).

3. The energy chain (100) according to one or more preceding claim, wherein an elastic member (280) is arranged between said elongated member protruding end (264) and said opposite surface (230) of the supporting chain link (200).

4. The energy chain (100) according to one or more preceding claims, wherein additional wheels (250) are arranged on additional corresponding shafts (252) slideable in corresponding slots (226) formed on said supporting chain link (200).

5. The energy chain (100) according to one or more preceding claims, wherein the supporting wheel (250) is so arranged as to protrude from the innermost or outermost portion of said external surface (210).

## Patentansprüche

1. Energieführungskette (100) für Kabel und Schläuche, mit einer stationären unteren Strecke und einer auf der unteren Strecke in Betrieb gleitend von einer die Kette beherrschenden Vorrichtung geschleppten oberen Strecke, enthaltend
- miteinander rotierend verbundene Kettenglieder (120) und
- Kettenhalterglieder (200) je mit einem Rad (250), einer Welle (252) und einem länglichen Element (260);
- auf jeder Seite (220) des Kettenhalterglieds (200) werden eine stirnseitige Rinne (222) und ein gegenüberliegende Rinne (222) je von einem Paar senkrechten Rippen (224) bestimmt, während erste senkrechte Nuten (226) an den Rinnen (222) nahe einer oberen äußeren Längsfläche (210) des Kettenhalterglieds (200) bestimmt werden;
- das besagte längliches Element (260) hat die Form einer U Griffe mit einem Paar Beinen (262) zusammen mit einem Schulter (264) und solche Abmessung um das Gleiten der Beinen (262) in den entgegengesetzten Rinnen (222) zu gestatten;
- das besagte Rad (250) wird
- in einer oberen Hohlraum (240, 240a, 240b) angeordnet, mit einer Öffnung (245) an der oberen Außenfläche (210) des Kettenhalteglieds (200) rechend nach innen in der Mittenstrecke des Kettenhalterglieds (200);
- an die Welle (252) in der oberen Hohlraum (240, 240a, 240b) befestigt; und
- geeignet um aus der oberen äußeren Längsfläche (210) des Kettenhalteglieds (200) herauszuragen;
- die besagte Welle (252) hat ein erstes Ende (253), das die Nut (226) der stirnseitigen Rinne (222) durchquert, und in einem Loch (263) einer Griffenbeine (262) angepasst wird; wahrend ein Zapfen (254) den Loch der anderen Griffenbeine (262) und die Nut (226) der entgegengesetzten Rinne (222) durchquert, und in ein zweites das Zapfen (254) aufnehmendes Wellenende (255) eingesetzt wird;
- Querglieder (110) mit entgegengerichteten Enden (115), wobei jedes Ende (115) mit einem Kettenglied (120) bzw. mit einem Kettenhalterglied (200) verbunden wird;
- mit einer Öffnung (130) für die Einführung der Kabel und Schlauche, wobei die Öffnung von den Quergliedern (110) und den an seinen entgegengerichteten Enden (115) verbundenen Kettengliedern (120) bzw. Kettenhaltergliedern (200) begrenzt wird;
- worin die Welle (252) des Halterrads (250) mindestens in einer Nut (226) des Kettenhalteglieds (200) von einer ersten Stellung zu einer zweiten Stellung gleiten kann, und die Welle (252) auch mit einem Ende dieses Elements von einer der Außenfläche (210) entgegengesetzten Fläche (230) des Kettenhalteglieds (200) vorsteht, worin in der stationären unteren Strecke immer das Halterrad (250a) von der besagten Fläche (210) vorsteht, wo die Welle (252) in der besagten ersten Stellung ist, während in der oberen geschleppten Strecke mit der Welle (252) in der zweiten Stellung das Halterad (250b) hinter die besagte Fläche (210) innerhalb der oberen Hohlraum (240, 240a, 240b) zurückgezogen wird, als das Rad (250b) während der Translationsbewegung der Kette ein von der stationären unteren Strecke vorstehendes Rad (250a) berührt, indem das Kettenrattern an das von der stationären unteren Strecke vorstehende Rad (250a) vermieden wird.

2. Energieführungskette (100) nach dem vorhergehenden Anspruch, worin weitere Nuten (228) an den entgegengesetzten Seiten des Kettenhalterglieds (200) angeordnet sind, wobei diese weiteren Nuten (228) mit den Nuten (226) und weiteren Löchern (265) des Beines (262) fluchten, um eine weitere durch diese weiteren Nuten (228) durchgehende Welle (272) aufzunehmen.

3. Energieführungskette (100) nach einem bzw. mehreren der vorhergehenden Ansprüche, worin ein elastisches Element (280) zwischen der vom länglichen Element vorstehenden Schulter (264) und der entgegengesetzten Fläche (230) des Kettenhalteglieds (200) angeordnet ist.

4. Energieführungskette (100) nach einem bzw. mehreren der vorhergehenden Ansprüche, worin weitere Räder (250) auf weiteren entsprechenden Wellen (252), die in entsprechenden, auf dem Kettenhalterglied (200) geschafften Nuten (226) gleiten, angeordnet sind.

5. Energieführungskette (100) nach einem bzw. mehreren der vorhergehenden Ansprüche, worin das Halterrad (250) derart angeordnet ist, dass es vom innersten bzw. äußersten Teil der Außenfläche (210) vorsteht.

## Revendications

1. Chaîne de transport d'énergie (100) pour la guide de câbles ou flexibles, constituée par un brin inférieur stationnaire et un brin supérieur traîné glissant sur le brin inférieur stationnaire pendant l'usage par un dispositif auquel la chaîne est asservie, comprenant :
- mailles de chaine (120) connectées pivotantes entre elles et avec
- mailles de support chaine (200), chacune ayant une roue (250), un arbre (252) et un élément allongé (260) ;
- sur chaque côté opposé (220) de la maille de support chaîne (200), un canal frontal (222) et un canal opposé (222) étant respectivement définis par une paire de nervures verticales (224) pour chaque canal (222), tandis que premiers nervures verticales (226) sont opportunément formés sur les canaux (222) près d'une surface extérieure longitudinale supérieure (210) du corps de la maille de support chaîne (200) ;
- ledit élément allongé (260) étant façonné comme une U griffe avec une paire de jambes (262) formées intégrées avec un épaulement (264) et dimensionné pour permettre le coulissement des jambes (262) dans les canaux opposés (222) ;
- ladite roue (250) étant
- logée dans une cavité supérieure (240, 240a, 240b) ayant une ouverture (245) sur la surface extérieure longitudinale supérieure (210) de la maille de support chaîne (200) et d'étendant vers l'intérieur dans le brin central du corps de la maille de support chaîne (200) ;
- fixée à l'arbre (252) dans la cavité supérieure (240, 240a, 240b) et
- apte pour faire saillie de la surface extérieure longitudinale supérieure (210) de la maille de support chaîne (200) ;
- ledit arbre (252) ayant une première extrémité (253) passant par la rainure (226) du canal frontal (222) et adapté dans un trou (263) d'une jambe de griffe (262), de sorte qu'un pivot (254) passe par le trou de l'autre jambe de griffe (262) et la rainure (226) du canal opposé (222) et est inséré dans une deuxième extrémité d'arbre (255) configurée pour recevoir ledit pivot (254) ;
- éléments transversaux (110) ayant extrémités opposées (115), chaque extrémité (115) étant connectée avec une maille de chaîne (120) ou une maille de support chaîne (200) ;
- une ouverture (130) pour l'introduction des câbles et flexibles, définie par lesdits éléments transversaux (110) et par les mailles de chaîne (120) ou mailles de support chaîne (200) connectées à leur extrémités opposées (115) ;
- dont l'arbre (252) de la roue de support (250) glisse dans au moins une rainure (226) de la maille de support chaîne (200) d'une première position à une deuxième position, l'arbre (252) étant aussi connecté avec une extrémité de l'élément allongé (260) ayant son autre extrémité comprenant l'épaulement (264) et faisant saillie d'une surface (230) de la maille de support chaîne (200) opposée à ladite surface extérieure longitudinale supérieure (210), où dans le brin inférieur stationnaire, la roue de support (250a) fait toujours saillie de la surface (210) lorsque l'arbre (252) est dans sa première position, tandis que dans le brin supérieur trainé, avec l'arbre (252) dans sa deuxième position, la roue de support (250b) est retractée derrière ladite surface extérieure longitudinale supérieure (210) dans la cavité supérieure (240, 240a, 240b) lorsque la roue (250b) fait contact avec une roue (250a) faisant saillie du brin inférieur stationnaire pendant le mouvement de translation de la chaîne, en évitant le sautillement de la maille sur la roue (250a) faisant saillie du brin inférieur stationnaire.

2. Chaîne de transport d'énergie (100) selon la revendication précédente, dont des autres rainures (228) ont prévues sur les dits côtés opposés (220) de la maille de support chaine (200) alignées avec lesdites rainures (226) et des autres trous (265) de la jambe (262) pour recevoir un autre arbre (272) passant dans les dites autres rainures (228).

3. Chaîne de transport d'énergie (100) selon une ou plusieurs revendications précédentes, dont un élément élastique (280) est disposé entre le dit épaulement (264) faisant saillie de l'élément allongé et ladite surface opposée (230) de la maille de support chaîne (200).

4. Chaîne de transport d'énergie (100) selon une ou plusieurs revendications précédentes, dont des autres roues (250) sont disposées sur des ultérieurs arbres correspondants (252), glissant dans des rainures correspondantes (226) prévues sur ladite maille des support chaîne (200).

5. Chaîne de transport d'énergie (100) selon une ou plusieurs revendications précédentes, dont la roue de support (250) est disposée pour faire saillie de la partie plus intérieure ou plus extérieure de ladite surface extérieure (210).
